# EUROPEAN PATENT APPLICATION

(11) **EP 4 686 616 A1**
(43) Date of publication of application: **04.02.2026**
(21) Application number: 25189504.1
(22) Date of filing: 15.07.2025
(51) Int. Cl.: B60R 13/04, B60J 5/10

(54) **BODY STRUCTURE AND VEHICLE COMPRISING THE SAME**

(30) Priority: 01.08.2024 CN 202411049896
(71) Applicant: Stellantis Auto SAS, 78300 Poissy (FR)
(72) Inventor: WANG, Zi Ye, SHANGHAI, 200030 (CN); YAN, Zhenghong Larky, SHANGHAI, 200030 (CN); SONG, Wenbin Mark, SHANGHAI, 200030 (CN); LI, Dan Dennis, SHANGHAI, 200030 (CN); LI, Bing, SHANGHAI, 200030 (CN)
(74) Representative: BCIP

(57) **Abstract**

The present disclosure relates to a body structure and a vehicle comprising the same. The body structure comprises a side body, a tailgate, a rear quarter trim, and a supporting panel provided between the side body and the rear quarter trim. An upper edge of the side body comprises a rear portion adjacent to a side edge of the tailgate when the tailgate is closed. The rear quarter trim is fixedly connected to an outer side of the side body, and an upper edge of the rear quarter trim extends beyond the rear portion. An upper edge of the supporting panel extends beyond the rear portion, and a covering member is provided at a top portion of the supporting panel. The covering member is configured to fill a gap between the upper edge of the rear quarter trim and the side edge of the tailgate when the tailgate is closed, and to cover the top portion of the supporting panel from its inner side when the tailgate is opened, such that the supporting panel is not visible from an interior of the vehicle. According to the body structure of the present disclosure, the covering member fills the gap between the upper edge of the rear quarter trim and the side edge of the tailgate when the tailgate is closed, and covers the top portion of the supporting panel that is originally visible from the interior of the vehicle when the tailgate is opened, such that the appearance of the vehicle is harmoniously unified in visual.

## Description

The present invention claims the priority of the Chinese application 202411049896.2 filed on August, the first of 2024 (01.08.2024), the content of which (text, drawings and claims) is incorporated herein by reference.

### RELATED FIELD

The present disclosure relates generally to the field of vehicle body construction, and more specifically to a body structure and a vehicle comprising the same.

### BACKGROUND

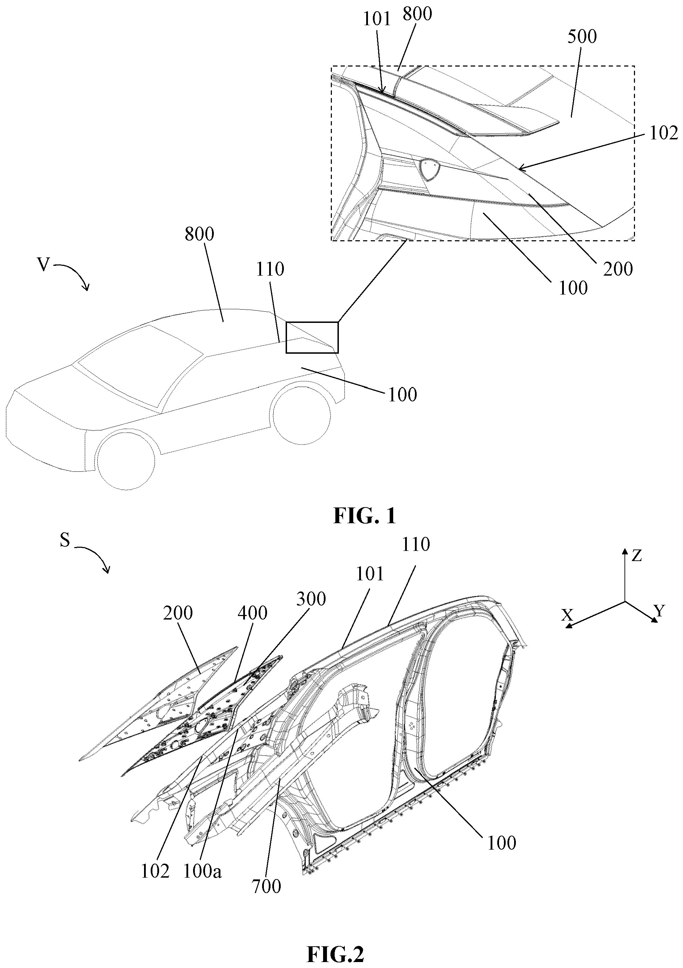

FIG. 1 schematically shows a side-rear body structure of a vehicle V. As shown in FIG. 1, the side-rear body structure of the vehicle V comprises a side body 100, a tailgate 500, and a top cover 800, wherein the side body 100 is fixedly connected to a side edge of the top cover 800, and the tailgate 500 is connected to a rear edge of the top cover 800 and can rotate between a closed position and an open position around a rotating shaft located at the rear edge of the top cover 800. That is, the upper edge 110 of the side body 100 comprises a front portion 101 that is fixedly connected to the side edge of the top cover 800, and a rear portion 102 that is adjacent to the side edge of the tailgate 500 when the tailgate 500 is closed.

In addition, the side-rear body structure as shown in FIG. 1 further comprises a rear quarter trim 200 having a substantially triangular shape and fixedly connected to the outer side of the side body 100 behind the rear-row window, and the upper edge of the rear quarter trim 200 extends slightly beyond the rear portion 102 of the upper edge of the side body 100 to form an appearance boundary affecting the styling of the vehicle between the upper edge of the rear quarter trim 200 and the side edge of the tailgate 500 when the tailgate 500 is closed.

A defect of this body structure is that when the tailgate 500 is closed, there may be an obvious gap between the upper edge of the rear quarter trim 200 and the side edge of the tailgate 500, which affects the aesthetic of the appearance of the vehicle. In addition, when the tailgate 500 is opened, the aesthetic of the position of a gutter positioned on the inner side of the rear quarter trim 200 is also poor, which affects the perceived quality for a user.

### SUMMARY

An object of the present disclosure is to provide a body structure, so as to ensure the aesthetic of the side-rear body when the tailgate is opened or closed.

To this end, a first aspect of the present disclosure provides a body structure of a vehicle, comprising a side body, a tailgate, and a rear quarter trim having a substantially triangular shape, wherein an upper edge of the side body comprises a rear portion adjacent to a side edge of the tailgate when the tailgate is closed, the rear quarter trim being fixedly connected to an outer side of the side body, and an upper edge of the rear quarter trim extending beyond the rear portion, wherein the body structure further comprises a supporting panel provided between the side body and the rear quarter trim and supporting the rear quarter trim, wherein an upper edge of the supporting panel extends beyond the rear portion, and a covering member is provided at a top portion of the supporting panel, and wherein the covering member is configured to fill a gap between the upper edge of the rear quarter trim and the side edge of the tailgate when the tailgate is closed, and to cover the top portion of the supporting panel from its inner side when the tailgate is opened, such that the supporting panel is not visible from an interior of the vehicle.

According to an optional embodiment of the present disclosure, the covering member comprises a body fixedly connected to the top portion of the supporting panel and, a first extension extending from the body towards the tailgate, wherein the body is configured to cover the top portion of the supporting panel from its inner side when the tailgate is opened, and the first extension is configured to fill the gap when the tailgate is closed.

According to an optional embodiment of the present disclosure, the top portion of the supporting panel is configured to protrude inwards, such that the body is substantially flush with an inner surface portion of the side body adjacent to the body.

According to an optional embodiment of the present disclosure, the first extension is configured to be spaced apart from the tailgate by a predetermined spacing when the tailgate is closed.

According to an optional embodiment of the present disclosure, the covering member further comprises a second extension extending from the body towards the rear quarter trim and abutting against an upper edge of the rear quarter trim.

According to an optional embodiment of the present disclosure, the covering member is integrally connected to the top portion of the supporting panel by molding or gluing.

According to an optional embodiment of the present disclosure, the covering member is an elastic member made of rubber material.

A second aspect of the present disclosure provides a vehicle comprising the body structure according to the first aspect of the present disclosure.

Therefore, according to the body structure of the present disclosure, the covering member fills the gap between the upper edge of the rear quarter trim and the side edge of the tailgate when the tailgate is closed, and covers the top portion of the supporting panel that is originally visible from the interior of the vehicle when the tailgate is opened, such that the appearance of the vehicle is harmoniously unified in visual, thereby improving the aesthetic of the side-rear body of the vehicle.

### BRIEF DESCRIPTION OF THE DRAWINGS

Other features and advantages of the present disclosure will be better understood through the following preferred embodiments described in detail in connection with accompanying drawings. In the drawings, same reference numerals indicate same or similar components.
FIG. 1 schematically shows a side-rear body structure of a vehicle V;
FIG. 2 is an exploded view of an embodiment of a body structure according to the present disclosure;
FIG. 3 is a perspective view of the body structure from its outer side with an enlarged portion clearly showing a covering member;
FIG. 4 is a cross-sectional view taken along the section AA in FIG. 3;
FIG. 5 is a partial perspective view of the body structure from its inner side;
FIG. 6 is a cross-sectional view (similar to FIG. 3) of a body structure for comparative reference.

### DETAILED DESCRIPTION

The implementation and usage of specific embodiments are discussed in detail below. However, it should be understood that the discussed specific embodiments are merely intended to illustrate specific ways of implementing and using the present disclosure, and are not intended to limit the scope of the present disclosure.

In the drawings, the X direction represents a longitudinal direction of the vehicle (i.e., a driving direction of the vehicle), the Y direction represents a lateral direction of the vehicle (i.e., a direction at an angle of 90 degrees with respect to the driving direction), and the Z direction represents a vertical direction of the vehicle. In addition, in this specification, "inner" and "outer" are both defined with reference to the inner and outer directions of the vehicle, for example, "inner side" represents a side facing the interior of the vehicle, and "outer side" represents a side facing the exterior of the vehicle.

A preferred embodiment of the body structure S according to the present disclosure will be described in detail below with reference to the accompanying drawings. The body structure S is an improvement to the side-rear body structure of the vehicle V shown in FIG. 1, and the features that have been described in detail above in connection with FIG. 1 are not repeated herein. It can be understood that the rear portion of the vehicle has a left-right symmetrical structure, and only the structure on the left side of the rear portion of the vehicle is illustrated and described herein as an example.

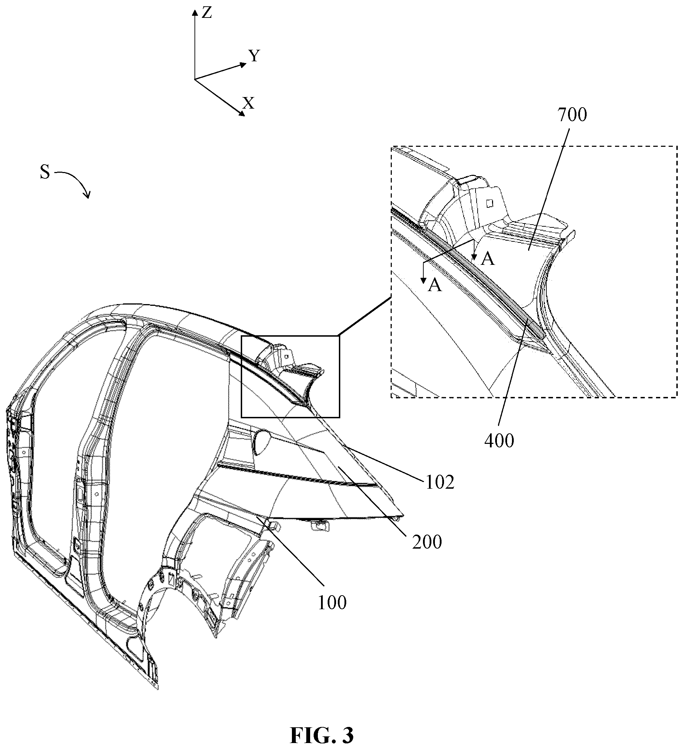

As shown in FIGS. 2 to 5, the body structure S according to the present disclosure further comprises a supporting panel 300 provided between the side body 100 and the rear quarter trim 200 and supporting the rear quarter trim 200. The supporting panel 300 is provided to have a triangular shape that is substantially the same as the shape of the rear quarter trim 200 ( referring to FIG. 2), and the upper edge 310 of the supporting panel 300 also extends slightly beyond the rear portion 102 of the upper edge of the side body 100 to support the top portion 220 of the rear quarter trim 200.

According to the present disclosure, the top portion 320 of the supporting panel 300 is provided with a covering member 400, and the covering member 400 is configured to fill the gap G between the upper edge of the rear quarter trim 200 and the side edge 510 of the tailgate 500 when the tailgate 500 is closed to ensure the aesthetic of the appearance of the vehicle, and to cover the top portion 320 of the supporting panel 300 from its inner side when the tailgate 500 is opened, such that the supporting panel 300 is not visible from the interior of the vehicle V, thereby ensuring that the material of the supporting panel 300 (usually unfinished raw material) is not exposed in the cabin.

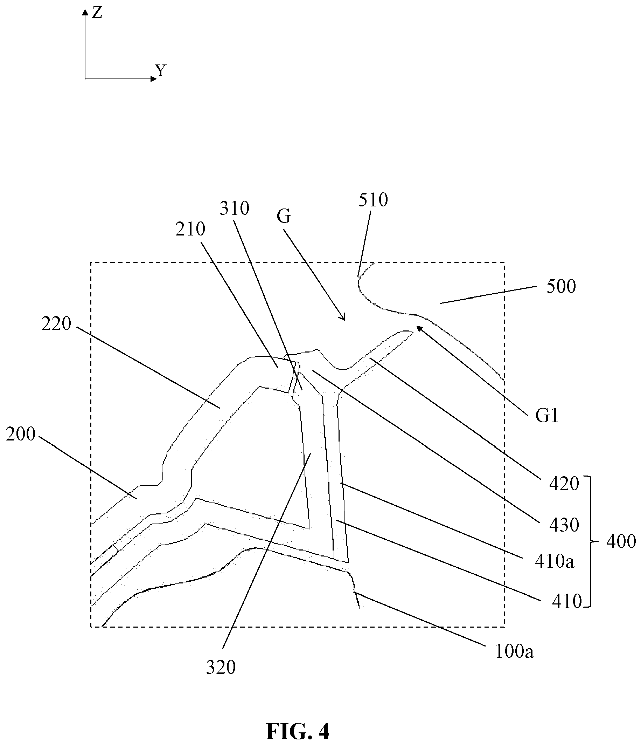

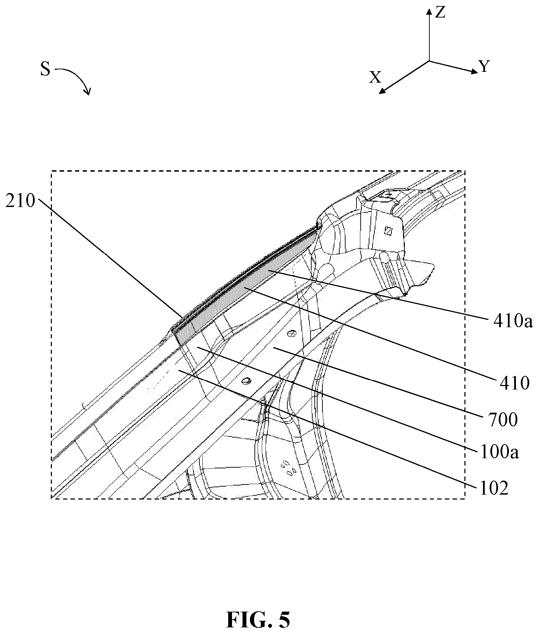

More specifically, as shown in FIGS. 4 and 5, the covering member 400 comprises a body 410 fixedly connected to the inner side of the top portion 320 of the supporting panel 300, and a first extension 420 extending from the body 410 towards the tailgate 500. The body 410 is configured to cover the top portion 320 of the supporting panel 300 from the inner side of the supporting panel 300 when the tailgate 500 is opened, and the first extension 420 is configured to fill the gap G between the upper edge 210 of the rear quarter trim 200 and the side edge 510 of the tailgate 500 when the tailgate 500 is closed. Preferably, the first extension 420 is configured to be spaced apart from the tailgate 500 by a predetermined spacing G1 (referring to FIG. 5) when the tailgate 500 is closed, and when the tailgate 500 is closed by a large force, the spacing G1 can prevent an external force from being directly transmitted to the rear quarter trim 200 and the side body 100.

Preferably, the covering member 400 further comprises a second extension 430 extending from the body 410 towards the rear quarter trim 200 and abutting against the upper edge 210 of the rear quarter trim 200 to cover a gap between the upper edge 210 of the rear quarter trim 200 and the upper edge 310 of the supporting panel 300.

Preferably, the top portion 320 of the supporting panel 300 is configured to protrude inwards such that the inner surface 410a of the body 410 is substantially flush with the inner surface portion 100a of the side body 100 adjacent to the body 410. Therefore, when the tailgate 500 is opened, the inner surface 410a of the body 410 of the covering member 400, the inner surface portion 100a of the side body 100, and the gutter 700 can maintain the continuity of the perceived quality from top to bottom.

Preferably, the covering member 400 is integrally connected to the inner side of the top portion 320 of the supporting panel 300 by molding or gluing. The covering member 400 and the supporting panel 300 are assembled to the side body 100 as one piece, which simplifies the assembling steps of the body structure S and makes the connection between the covering member 400 and the supporting panel 300 more stable and firm.

Preferably, the covering member 400 is an elastic member made of rubber material. For example, the covering member 400 is configured as an adhesive strip. The elastic property of the covering member 400 can make it play a certain buffering role when subjected to an external force such as closing of the tailgate.

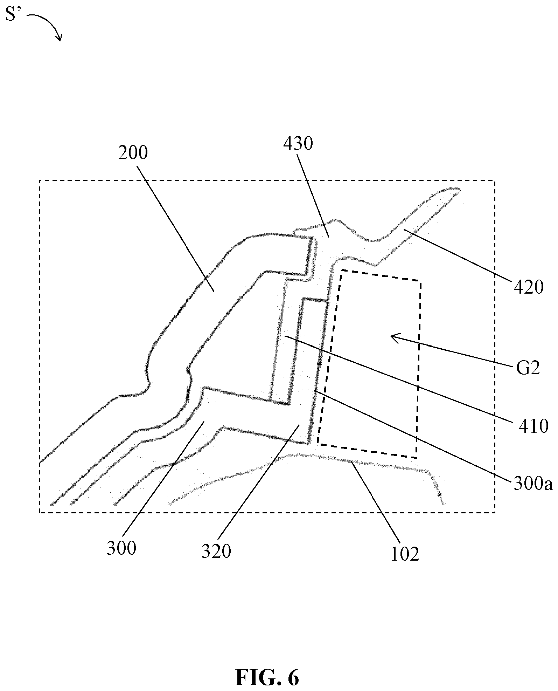

FIG. 6 shows a cross-sectional view of a body structure S' for comparative reference with the present disclosure. In contrast to the fixed position of the body 410 of the covering member 400 on the top portion 320 of the supporting panel 300 in the present disclosure, the body 410 of the covering member 400 in FIG. 6 is fixedly connected to the outer side of the top portion 320 of the supporting panel 300 by passing through the gap between the upper edge of the rear quarter trim 200 and the upper edge of the supporting panel 300. Therefore, when the tailgate 500 is opened, the raw material of the top portion 320 of the supporting panel 300 can be seen from the interior of the vehicle, and due to the shape of the top portion 320 of the supporting panel 300, an obvious "concave cavity G2" shape is formed between the first extension 420 of the covering member 400 and the rear portion 102 of the upper edge 110 of the side body 100, which affects the perceived quality for a user when the tailgate 500 is opened. On the contrary, the body structure of the present disclosure can ensure the aesthetic of the inner side and outer side of the vehicle regardless of whether the tailgate 500 is in the open or closed position by the specific configuration and fixing manner of the covering member 400 and the specific shape of the top portion 320 of the supporting panel 300, thereby improving the perceived quality for a user.

The technical contents and features of the present disclosure have been disclosed above. However, it is conceivable that, those skilled in the art can make various changes and improvements to the above concept under the creative idea of the present disclosure, all of which fall within the protection scope of the present disclosure.

The description of the foregoing embodiments is illustrative rather than limitative, and the scope of protection of the present disclosure is determined by the appended claims.

## Claims

1. A body structure (S) of a vehicle (V), comprising a side body (100), a tailgate (500), and a rear quarter trim (200) having a substantially triangular shape, wherein an upper edge (110) of the side body (100) comprises a rear portion (102) adjacent to a side edge (510) of the tailgate (500) when the tailgate (500) is closed, the rear quarter trim (200) being fixedly connected to an outer side of the side body (100), and an upper edge (210) of the rear quarter trim (200) extending beyond the rear portion (102),
wherein the body structure (S) further comprises a supporting panel (300) provided between the side body (100) and the rear quarter trim (200) and supporting the rear quarter trim (200),
wherein an upper edge (310) of the supporting panel (300) extends beyond the rear portion (102), and a covering member (400) is provided at a top portion (320) of the supporting panel (300),
wherein the covering member (400) is configured to fill a gap (G) between the upper edge (210) of the rear quarter trim (200) and the side edge (510) of the tailgate (500) when the tailgate (500) is closed, and to cover the top portion (320) of the supporting panel (300) from its inner side when the tailgate (500) is opened, such that the supporting panel (300) is not visible from the interior of the vehicle (V).

2. The body structure (S) according to claim 1, wherein the covering member (400) comprises a body (410) fixedly connected to the top portion (320) of the supporting panel (300), and a first extension (420) extending from the body (410) towards the tailgate (500),
wherein the body (410) is configured to cover the top portion (320) of the supporting panel (300) from its inner side when the tailgate (500) is opened, and the first extension (420) is configured to fill the gap (G) when the tailgate (500) is closed.

3. The body structure (S) according to claim 2, wherein the top portion (320) of the supporting panel (300) is configured to protrude inwards, such that the body (410) is substantially flush with an inner surface portion (100a) of the side body (100) adjacent to the body (410).

4. The body structure (S) according to claim 2, wherein the first extension (420) is configured to be spaced apart from the tailgate (500) by a predetermined spacing (G1) when the tailgate (500) is closed.

5. The body structure (S) according to claim 2, wherein the covering member (400) further comprises a second extension (430) extending from the body (410) towards the rear quarter trim (200) and abutting against the upper edge (210) of the rear quarter trim (200).

6. The body structure (S) according to any one of claims 1 to 5, wherein the covering member (400) is integrally connected to the top portion (320) of the supporting panel (300) by molding or gluing.

7. The body structure (S) according to any one of claims 1 to 5, wherein the covering member (400) is an elastic member made of rubber material.

8. A vehicle (V), comprising the body structure (S) according to any one of claims 1 to 7.
